# EUROPEAN PATENT APPLICATION

(11) **EP 4 282 619 A1**
(43) Date of publication of application: **29.11.2023**
(21) Application number: 23174376.6
(22) Date of filing: 19.05.2023
(51) Int. Cl.: B29C 51/32, B26D 3/16, B26D 1/45, B26D 5/08, B27B 33/14, B27B 17/00, B26D 1/04, B29C 51/10, B29C 49/02, B23D 57/02, B23D 57/00, B29C 49/50, B29L 23/00, B26D 7/01

(54) **A CUTTING APPARATUS FOR CUTTING HOLLOW TUBES, IN PARTICULAR HOLLOW TUBES MADE OF A SOFT MATERIAL**

(30) Priority: 20.05.2022 EP 22174643
(71) Applicant: Trocellen GmbH, 53840 Troisdorf (DE)
(72) Inventor: KOVÁCS, Zombor László, 1223 Budapest (HU)
(74) Representative: Horn Kleimann Waitzhofer Schmid-Dreyer Patentanwälte- und Rechtsanwälte PartG mbB

(57) **Abstract**

A cutting apparatus (10) for cutting hollow tubes (7), in particular hollow, tubes (7) made of a soft material, in particular a foam material, comprises a structural base (1) comprising an opening (4) adapted for insertion of a tube region to be cut off. The structural base (1) further comprising a first guide track (5) that at least in a first cutting section (51) extends near a circumferential edge (41) of the opening (4). The cutting apparatus (10) further comprising a first drive element (2) that is received in the first guide track (5) and is movable along the first guide track (5) in a predefined first cut direction (D). The first drive element (2) is equipped with at least one circumferential cutting edge (31, 32, 33, 34, 35), that is directed towards the opening (4), wherein the cutting edge (31, 32, 33, 34, 35) protrudes at least partially into the opening (4) while in the first cutting section (51).

## Description

The present disclosure relates to a cutting apparatus for cutting hollow tubes, in particular hollow tubes made of a soft material, in particular a foam material.

Hollow tubes made from soft materials, for example from foams, are commonly used in various applications in industrial, domestic and automotive applications, among others as air ducts for automotive air conditioning and/or ventilation systems. Some instances of such hollow tubes are produced based on a flat sheet material that is put to shape by a process called thermoforming. To form a circumferentially closed tube the flat sheet material is joined along its end sections which results in at least one collar, flange or seam that protrudes outwardly in radial or tangential direction and extends along the axial direction of the tube. EP 0 445 592 B1 discloses polyolefin-foam tubes and hollow bodies and methods for producing such.

In order to join such tubes to neighboring technical systems it can be required to equip its axial end portions with specific connectors which requires the respective end portion to be straight and clean. In addition, it may be required to shorten such tubes in order to bring them to a desired length for a certain application.

After all, cutting of such tubes plays an important role in the practical technical implementation. However, the cutting of hollow tubes made from soft, in particular foam, materials has often been a challenge as the tubes have a low stiffness and therefore, when using conventional cutting techniques, are prone to deformation that can damage them irreversibly. In practice well-established electromechanical cutting techniques making use of saw blades with a rotating or translational movement or water jet cutting have proven to be not always suitable for the use with hollow tubes made from soft, in particular foam, materials.

Rather, manual cutting with a knife or other hand tools having a sharp blade has still proven to provide the best quality and lowest reject rates. This however is a slow process and requires adequately trained workers.

From remote fields of the prior art various cutting apparatuses operating with drive elements like chains or ropes that are equipped with one or more cutting edges are known.

US 2011/0078905 A1 discloses a hand-held cutting tool which is used to readily cut or sever flexible pipe or tubing. The tool features one or more openings in the body of the tool sized to accommodate pipe or tubing to be cut. The tool is used to cut tubing by inserting the tubing into one of the apertures. A single retractable blade is radially urged against the tubing and the tool then orbited about the tubing and/or the tubing rotated until the blade severs the tubing.

WO 2006/022553 A1 discloses a device for cutting tubular elements, comprising a detachable frame structure and a cutting blade performing a guillotine cutting action in one plane parallel to a main plane of the frame structure. The frame structure comprises two parallel leg elements and a joining element securely connected to one end of each leg element, wherein at least along one leg element on each side of the cutting blade a drive device is arranged, and at least two drive devices are synchronized with regards to both power and movement of at least one holding element for the cutting blade. The detachable frame further comprises one detachable plate element comprising a recess complementary to the form of the pipe to be cut, facing the cutting blade. The plate element form two supporting areas for the pipe to be cut on opposite sides of the plane for the movement of the cutting blade.

JPH54223 A discloses a wire saw comprising a motor that drives a pulley that drives a cutting wire that is equipped with cutting teeth. The cutting teeth are made of a carbide material having a high hardness. The object to be cut is placed inside a ring that is encircled by the cutting wire. The cutting forces are composed of a tangential component, due to the movement of the cutting wire, and a radial component, in the form of an auxiliary cutting force that presses the cutting wire on the surface of the object to be cut. The cutting apparatus disclosed therein is optimized for the cutting of hard materials like stone however is not suitable for cutting low stiffness structures like hollow tubes made from soft, in particular foam, materials as the application of auxiliary cutting forces, which is essential to the machine concept described therein, may damage the tube structure.

US 3,958,332 A discloses a cable saw for cutting tree logs. The cable saw comprises a motor that drives a chain, which is equipped with cutting teeth. The chain is guided in a closed manner in two guide sections extending away from a motor housing that holds the motor. The guide sections span a cutting section in which the chain runs freely and unsupported. In operation, the log to be cut is received in an inner area delimited by the guide sections and the cutting section, and the chain is pressed against the log by applying an auxiliary cutting force on the motor housing that transmits the auxiliary cutting force trough the guide sections on the cutting section of the chain. The cable saw described therein is equally not suitable for cutting hollow tubes made from soft, in particular foam, materials as the application of the auxiliary cutting force can, as mentioned above, damage the structure of the tube.

DE 10 2004 022 067 A1 discloses a cutting apparatus that comprises a sword that is bent around by 180° so that the sword has two sides being oppositely arranged thus forming an interior region. The sword comprises a guide track in that a chain equipped with cutting teeth is movably received. The cutting teeth protrude from the sword in an axial direction so that the cutting apparatus can be used to remove a region from a workpiece that has the shape of the bent sword without destroying the cut-out region and the remaining workpiece. As the cutting teeth of apparatus described therein protrude in the axial direction it does not allow the cutting of hollow tubes to a desired length.

It is one object of the present invention to provide a cutting apparatus that allows the at least partially automated cutting, in particular shortening, of hollow tubes or bodies made from a soft, in particular foam, material and that does not damage the tube during cutting.

According to a first aspect, a cutting apparatus for cutting hollow tubes, in particular hollow tubes made of a soft material, in particular a foam material, is provided having the features of the independent claim.

In an embodiment a cutting apparatus for cutting hollow tubes, in particular hollow tubes made of a soft material, in particular a foam material, is proposed. The cutting apparatus comprises a structural base having an opening adapted for insertion of a tube region to be cut off. The structural base further comprises a first guide track that at least in a first cutting section extends near a circumferential edge of the opening. In the first guide track a first drive element is received and is movable along the first guide track in a predefined first circumferential cut direction. The first drive element is equipped with at least one cutting edge that is directed towards the opening. The cutting edge protrudes at least partially into the opening while in the first cutting section.

In embodiments, the first guide track is implemented to guide the first guide element in a circumferential direction of the opening and/or the hollow tube to be cut.

Directional designations used herein, such as radial or tangential, refer to the axial direction given by the normal direction of a plane in which the first guide track runs.

"Directed towards the opening" can in particular have the meaning that the cutting edge extends radially or tangentially inwardly. The cutting edge is, in particular, arranged to cut in a plane in that the opening extends.

As the first drive element is supported by the first guide track of the structural base at least in the first cutting section thereof the cutting element cuts exclusively tangentially along the contour of the hollow tube to be cut. The drive element being guided in the first guide track in the first cutting section therefore is essential to the present invention. Other than conventional wire or band saws known from the prior art the apparatus according to the invention does not involve the application of unacceptably high auxiliary cutting forces which makes the automated cutting of hollow tubes made from soft materials without damage possible.

The cross section of the opening of the structural base corresponds to an outer contour of the tube to be cut. The contour of the opening can be as closely as possible matched to the outer contour of the tube to be cut so that the width of a gap between the edge of the opening and the outer contour of the tube is minimized. A tighter fit between the edges of the opening and the contour of the tube to be cut is generally beneficial as this reduces deformation of the tube that is detrimental to a good cutting result.

In embodiments, the guide track comprises at least one non-linear cutting section, e.g. a curved, bent, or semicircular section. The cutting section and the opening thus follows the outer circumferential contour of the tube to be cut.

In embodiments, the cutting edge radially extends into the opening but does not move radially inwards towards the interior of the opening, Rather, a circumferential or tangential movement is performed.

Preferably, the cutting edges, e.g. blades, extend perpendicular to the movement direction of the drive element inwardly towards the opening interior.

In embodiments, a cutting direction is perpendicular to the movement of the drive element.

For example, the guide track is implemented to prevent a radial movement of the drive element and/or the cutting edge.

The opening can have any shape required to cut a certain tube. In embodiments the shape of the opening can be selected from the group comprising a rectangular, circular, and ellipsoid shape. In embodiments the shape of the opening can be a rectangle with rounded corners. In particular, the opening and/or the tube to be cut has a non-circular cross-section.

In embodiments the cutting apparatus is implemented and suitable for cutting for hollow tubes, bodies and/or ducts made of a polyolefin-foam material. The foam material may be manufactured according to EP 1 521 675 B1. The hollow tube to be cut is, in particular, produced in a manufacturing process according to EP 0 445 592 B1.

To further improve the cutting result the at least one cutting edge can be coupled to a heating device that is adapted to heat the at least one cutting edge. This is particularly useful for the cutting of hollow tubes made of a thermoplastic material. Heating of the cutting edge softens the material of the tube and therefore contributes further to allow for a cutting with low deformation of the tube.

In embodiments the cutting edge comprises a sharp element suitable for cutting a foam material, e.g. a blade, a knife, a filament, e wedge, scissors etc.

In embodiments the first guide track can be formed integrally with the structural base or comprise additional parts, in particular one or more guide rails that are coupled to the structural base.

In embodiments the structural base can be covered by or mounted in at least one housing part of a housing. In some instances of the invention the housing fully covers the guide track so that injuries with moving parts can be avoided.

In other embodiments the structural base can be part of a housing of the cutting apparatus, for example it can form at least one housing part comprising an exterior housing wall.

An exemplary housing comprises two housing shells that can be separated in a plane in that the first guide track is extending or in a plane parallel thereto. The housing can additionally or alternatively comprise an inner circumferential wall that extends around the circumference of the opening of the structural base. At this inner wall at least one circumferential slit can be provided that at least in the cutting section of the first guide track allows the at least one cutting edge to protrude into the opening.

The housing or at least components thereof can be made of a plastic material, in particular a thermoplastic material, in particular, an injection-moldable thermoplastic material. The structural base or at least components thereof, in particular, the first guide track, can be made of a plastic material, in particular a thermoplastic material, in particular an injection-moldable thermoplastic material. A plastic material is advantageous for the guide track as it provides a beneficial tribological behavior when in contact with the first drive element.

According to a further embodiment the first guide track comprises at least a second cutting section extending near the circumferential edge of the opening. The second cutting section, relatively to the first cutting section, can be in particular arranged at an opposite side of the opening. The cutting edge protrudes at least partially into the opening while in the second cutting section.

The first guide track can comprise more cutting sections, for example third, fourth and further cutting sections. In embodiments third and fourth cutting sections can be arranged near other opposing edges of the opening. The third and fourth cutting sections can neighbor the first and/or second cutting sections at respective corner sections of the circumferential edge of the opening.

In yet another embodiment the first and/or second and/or further cutting sections extend over at least 80 %, in particular at least 90 %, of the total circumference of the opening. In embodiments it is even possible that the first and/or second and/or further cutting sections extend over 100 % of the total circumference of the opening.

According to a further embodiment the opening is circumferentially closed. This is beneficial as a closed opening provides the best possible support for the tube to be cut.

According to yet a further embodiment the first guide track comprises at least one parking section, wherein the at least one cutting edge does not protrude into the opening while in the parking section. In case the first drive element is equipped with more than one cutting edge it can be beneficial that none of the cutting edges protrudes into the opening while in the parking section. The parking section provides a rest position for the at least one cutting edge and corresponds to a non-operating state of the cutting apparatus. In this non-operating state it is possible to insert a tube section to be cut into the opening of the structural base without interfering with the at least one cutting edge.

In some instances of the present invention the guide track can comprise at least a second parking section that, relatively to the first parking section, can be arranged on an opposite side of the opening.

In a special embodiment the parking section is formed by a section of the first guide track that extends away from the edge of the opening, in particular in the form of a loop or a radially or tangentially extending section.

In embodiments the structural base comprises at least one slot that extends from the opening into the structural base, in particular in a radial or tangential direction, wherein the slot is adapted to receive a collar portion of the tube to be cut. The slot beneficially helps to further support the outer contour of the tube to be cut in a form-fit manner. The shape and dimensions of the slot can be adapted to the shape and dimensions of a collar portion of the tube to be cut.

In a further embodiment the first guide track comprises a collar cutting section in that it extends near an edge of the slot. The at least one cutting edge protrudes into the slot while in the collar cutting section. In other words the first guide track extends as near as required to the edge of the slot so that the cutting edge can cut through a collar portion of the tube while in the collar cutting section. As the collar portion of typical hollow tubes made of a soft material can comprise at least two layers of material the cutting edge can be implemented to cut through at least two material layers in the collar cutting section. This embodiment allows the automated cutting of hollow tubes having a collar portion.

According to a further embodiment the structural base can comprise a further slot that extends from the opening into the structural base, in particular in a radial or tangential direction. The further slot is adapted to receive a further collar portion of the tube to be cut. The first guide track can comprise a further collar cutting section, in that it extends near an edge of the further slot, wherein the at least one cutting edge protrudes into the further slot while in the further collar cutting section. This embodiment allows the automated cutting of hollow tubes having two collar portions.

In a special embodiment the first guide track can comprise two collar cutting sections per slot in that it extends near to oppositely arranged edges of the respective slot. While moved to the oppositely arranged collar cutting sections the at least one cutting edge protrudes into the slot from opposing sides of the slot. This allows a very rigid or even two-layer material of a collar portion of the tube to be cut without hassle.

In another special embodiment the slot and the further slot are arranged at opposing edges or corners of the opening. In other embodiments the slot and the further slot can be arranged anywhere around the circumference of the opening so that their positioning corresponds to the positioning of the collar portions of the tube to be cut.

In an alternative embodiment the structural base comprises a second guide track that at least in a first cutting section extends near a circumferential edge of the opening. The cutting apparatus can comprise a second drive element that is received in the second guide track and is movable along the second guide track in a predefined second circumferential cut direction. The second drive element can be equipped with at least one cutting edge, that is directed towards the opening. The cutting edge of the second drive element can protrude at least partially into the opening while in the first cutting section of the second guide track. Particularly the second cut direction can be inverted relatively to the first cut direction.

All features, combination of features and advantages disclosed herein for the first guide track, in particular features referring to its parking sections and/or collar cutting sections, are mutatis mutandis applicable to the second guide track as well.

The first and/or second drive element may have an extended elongation along its movement direction in the guide track. One may refer to an "elongated drive" element. In embodiments, the respective drive element comprises sub-elements that are coupled to one another and move together along the guide track in a chain-like fashion.

In embodiments the first elongated drive element and/or second drive element can be a chain, a rope, a wire or a belt. Other drive elements that the skilled person considers applicable in the context of the invention and that are not explicitly mentioned herein are comprised by the invention as well. A chain as drive element is considered beneficial as it is mechanically robust and wear-resistant. A belt, in particular a toothed belt, as drive element can be considered beneficial as it causes low noise which makes working with the cutting apparatus more comfortable.

In embodiments the first guide track can provide a closed loop around the circumference of the opening. Alternatively or additionally the elongated drive element(s) can be endless, i.e. do not have any open ends. In other embodiments the elongated drive element(s) can have open ends.

"Equipped" in regards to the at least one cutting edge can in particular have the meaning that the cutting edge is fixedly attached to the drive element but also comprises embodiments in that the cutting edge forms an integral part of the drive element. This integration of the cutting edge to the drive element is in particular beneficial for the drive element being a chain, wherein the cutting edge can be formed integrally with at least one chain link. The drive element and the cutting edge being separate parts has the advantage that the cutting edge can be replaced easier when worn.

The cutting edge can comprise or consist of a hard material, in particular a metal-based material or ceramic material. The cutting edge can have a blade or teeth shaped structure that can be tailored to the material properties of the tube to be cut.

In a further embodiment of the cutting apparatus the first drive element and/or second drive element can be equipped with a plurality of cutting edges that are spaced along the longitudinal extension of the first drive element and/or second drive element. In particular the plurality of cutting edges having different heights so as to protrude into the opening to a different extent.

In a special embodiment the plurality of cutting edges can be arranged at elongated drive element(s) in groups of at least two or more cutting edges per group. This has the advantage that it is possible to cut in different cutting sections of the guide track at the same time. A particularly beneficial embodiment combines a guide track with two parking sections with an elongated drive element being equipped with two groups of cutting edges. The two groups of cutting edges can be arranged at the elongated drive element so that when a first group of cutting edges is in the first parking section a second group of cutting edges is in the second parking section. This has the positive effect that under operation a full cutting cycle that completely circumvents the opening can be achieved with only a partial rotation of the elongated drive element, for example a half of a full rotation. This significantly reduces the cutting time and therefore further improves efficiency.

In embodiments the heights of the plurality of cutting edges increases or decreases in the predefined first and/or second circumferential cutting direction. This advantageously allows the cutting of the tube to happen gradually, i.e. each cutting edge only removes a comparably low amount of material from the tube resulting in low shear forces being applied to the tube and therefore only a minimum of deformation.

In embodiments the cutting apparatus comprises at least one motor, in particular an electric motor, that is adapted to drive the first and/or second drive element along the predefined first and/or second circumferential cut direction. If the cutting apparatus comprises two drive elements it is possible that two motors are provided that independently drive the first and second drive elements.

The respective cut direction is preferably circumferential with respect to a circumference of the opening and/or tube to be cut.

Lastly the cutting apparatus can be provided with at least one indicator device that is adapted to notify to a user of the cutting apparatus the at least one cutting edge being in a parking section of a guide track. The indicator device can in particular comprise an optical, tactical and/or acoustic communication means. This, on the one hand, allows the user to determine that the cutting process is finished and, on the other hand, allows the user to determine that the cutting apparatus is in its non-operating state in that a tube to be cut can be safely inserted into the opening.

According to a second aspect a method for cutting hollow tubes, in particular hollow tubes made of a soft material, in particular a foam material, is presented, the method comprising at least of the steps of:
- moving at least one cutting edge along a closed cutting contour (contour of the hollow tube to be cut) in a circumferential direction (cut direction), wherein the cutting edge faces towards the interior of the area enclosed by the cutting contour;
- guiding the cutting edge along a guide track, said guide track enclosing at least partially the area enclosed by the cutting contour;
- radially compressing the hollow tube to be cut at the cutting contour for placing an outer surface of the tube opposite to the cutting edge;
- inserting the cutting edge radially through a wall of the tube to be cut;
- if the hollow tube comprises an outwardly protruding flange of at least two attached sheets along a longitudinal direction of the tube, cutting into an outer edge of the flange;
- cutting a circumferential wall of the tube to be cut by moving the cutting edge tangentially along the cutting contour, wherein the cutting edge radially protrudes through a thickness of the wall of the tube to be cut.

It is understood that aspects and features disclosed or explained with respect to the cutting apparatus equally apply to the cutting method disclosed. In particular, the presented apparatus is implemented to carry out the cutting method.

Another aspect of this disclosure involves the use of an apparatus as disclosed above or below with respect to specific embodiments for cutting tube-like structures made of a polyolefin foam material, in particular, made of twin-sheet materials according to EP 1 521 675 B1 and/or EP 0 445 592 B1, which are hereby incorporated by reference.

In embodiments, the cutting apparatus includes a mold tool having an interior volume for thermoforming the hollow tube, wherein the structural base surrounds a cross-section of the mold tool, and the cutting edge protrudes into the interior volume.

The cutting apparatus may be integrated in a thermoform mold, e.g including heating, suction and/or vacuum means for generating a hollow structure made of at least to polyolefin foam sheets.

According to a further aspect a thermoforming device comprising a mold tool and a cutting apparatus as disclosed above or below is presented. The mold tool, in particular, comprises an upper and a lower mold.

Preferably, the thermoforming device is implemented to manufacture twin-sheet materials according to EP 1 521 675 B1 and/or EP 0 445 592 B1 in a thermoforming process.

Integrating the cutting apparatus into a thermoforming device reduces the number steps in a manufacturing process for hollow tubes. Further, the position of the cut is accurately defined as the thermoformed hollow structure is kept in the mold during the cutting process.

Thus, the present disclosure includes aspects of methods for producing a duct made of foam material with a clean cut seam at an opening.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
- Fig. 1: shows a first embodiment of a cutting apparatus with a closed housing;
- Fig. 2: shows a second embodiment of a cutting apparatus with an open housing;
- Fig. 3: shows the cross section of an exemplary hollow tube to be cut with the cutting apparatus according to the second embodiment; and
- Fig. 4: shows an embodiment of a thermoforming device including an embodiment of the cutting apparatus.

In the Figures, like reference numerals designate like or functionally equivalent elements, unless otherwise indicated.

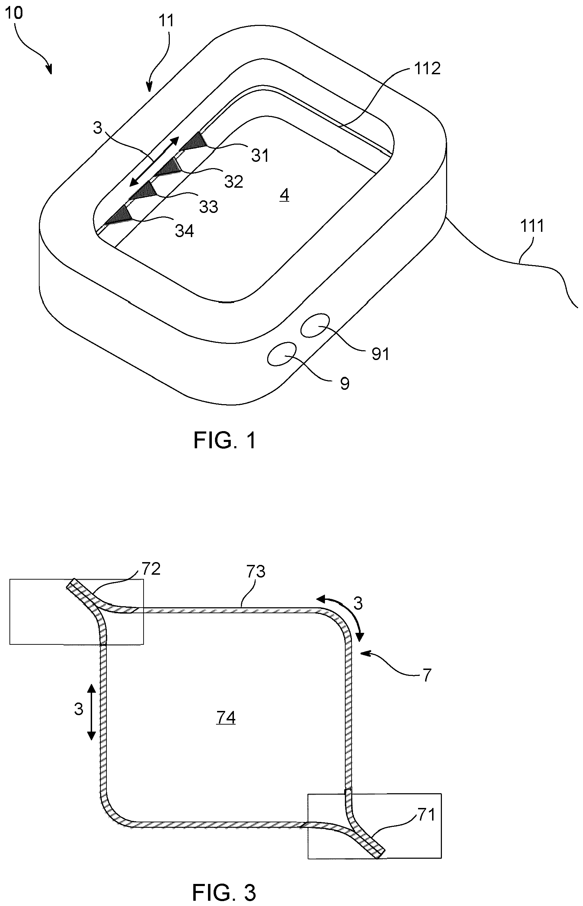

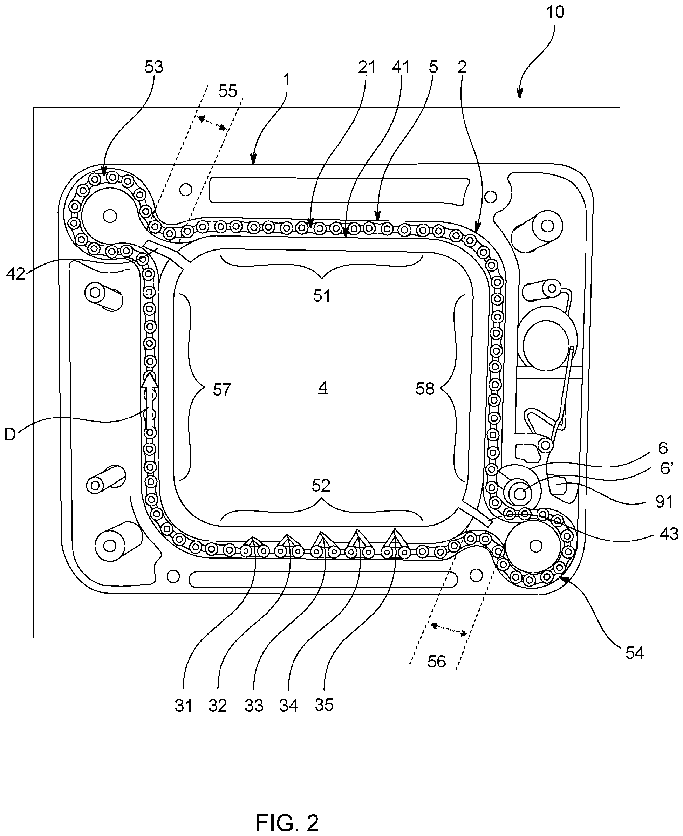

Fig. 1 shows an isometric view of the cutting apparatus 10 according to the invention. The apparatus 10 comprises a housing 11 that houses or includes a structural base 1 (see Fig. 2) and that has an opening 4 that is adapted for the insertion of a tube section to be cut off. The shape of the opening 4 in both embodiments shown in the Figures is rectangular with rounded corners. However, in not shown embodiments the opening 4 can have any shape to accommodate a given tube contour. The dimensions of the opening 4 are tightly matched to the outer contour of the tube to be cut so as to support the tube as firmly as possible while cutting. At an inner circumferential wall of the housing that neighbors the opening 4 a circumferential slit 112 is provided through that a plurality of cutting edges 31, 32, 33, 34 protrude into the opening 4 in a radial or tangential direction. The cutting edges 31, 32, 33, 34 are arranged at a first drive element 2 (see Fig. 2) that is adapted to run around the opening 4 in a circumferential direction 3 and move the cutting edges 31, 32, 33, 34 around the circumference of the opening 4 so that a wall of a hollow tube that has been inserted into the opening 4 is cut by application of tangentially (or circumferentially) acting cutting forces. Fig. 1 shows the apparatus 10 in its operating state with the cutting edges 31, 32, 33, 34 protruding into the opening. In a non-operating state the cutting edges 31, 32, 33, 34 are retracted from the opening 4 so that insertion of the tube to be cut is possible.

The apparatus 10 comprises a power cord 111 that supplies power to a motor that drives the first drive element 2. On the housing 11 there is a switch or pushbutton 9 with that the apparatus 10 can be activated. Additionally, the housing 11 comprises an indicator light 91 that is adapted to notify to a user when the apparatus 10 is in its non-operating state, i.e. to notify that a cutting cycle is completed, in particular to notify that the cutting edges 31, 32 ,33, 34 are in their rest position in that they do not protrude into the opening 4.

Fig. 2 shows the internals of the cutting apparatus 10, i.e. with opened housing. The apparatus 10 comprises a structural base 1 that has an opening 4 and a first guide track 5 that circumvents the opening 4. In the shown embodiment the structural base forms 1 a part of the housing, in particular an upper or lower housing shell. The guide track 5 has a first cutting section 51 and a second cutting section 52 in that it extends near an edge 41 of the opening 4. The first and second cutting sections 51,52 are arranged at opposite sides of the opening 4. Additionally the guide track has third 57 and a fourth 58 cutting sections that are equally arranged at opposing sides of the opening 4 and that each neighbor the first 51 and second 52 cutting sections in respective corner sections of the circumferential edge 41 of the opening 4.

In the guide track 5 a first drive element 2 is received that is movable along the first guide track 5 in a first cut direction D. The first drive element is an elongated drive element 2 can be a chain that comprises a multitude of chain links 21 as sub-elements.

The first drive element 2 is driven by a pulley or sprocket 6 that in turn is driven by a drive shaft 6' that can be coupled to a motor, in particular an electric motor (not shown).

The first drive element 2 is equipped with a plurality of cutting edges 31, 32, 33, 34, 35 that are spaced along the longitudinal extension of the first drive element 2. In particular the cutting edges 31, 32, 33, 34, 35 are fixedly arranged to the first drive element 2, for example to individual chain links 21. The cutting edges 31, 32, 33, 34, 35 are directed towards the opening, i.e. extend in an essentially radially inwardly direction.

The cutting edges 31, 32, 33, 34, 35 have different lengths so that they protrude into the opening 4 to a different extent. The height of the cutting edges 31, 32, 33, 34, 35 increases against the first cut direction D. This has the positive effect that the material of the tube 7 to be cut (see Fig. 3) is removed gradually as the tips of the cutting edges 31, 32, 33, 34, 35 come into contact with the tube 7 one after the other.

The first elongated drive element 2 is endless and the first guide track circumvents the opening 4 completely.

The structural base 1 is provided with two slots 42, 43 that are arranged in opposing corner sections of the opening 4. The slots 42, 43 protrude from the opening 4 in a radial or tangential direction into the structural base 1. In other words the slots 42, 43 form recesses in a material of the structural base 1. The slots 42,43 are adapted to receive corresponding collar portions 71,72 of the tube to be cut 7 (see Fig. 3). The first guide track 5 has collar cutting sections 55,56 that correspond with the slots 42, 43 and in that the first guide track 5 extends near an edge of the respective slots 42, 43. When the cutting edges 31, 32, 33, 34, 35 are moved to the collar cutting sections 55, 56 they protrude into the slots 42, 43 and cut through a collar portion 71, 72 of the tube 7 to be cut received therein. The first guide track 5 provides two collar cutting sections 55, 56 per slot 42, 43 that are arranged near to oppositely arranged edges of the slots 42, 43. Due to a redirection of the first drive element 2 the two collar cutting sections 55, 56 per slot 42, 43 are operated with a relatively inverted cutting sense.

The state of the apparatus shown in Fig. 2 is its operating state in that the cutting edges 31, 32, 33, 34, 35 protrude into the opening 4. In a non-operating state the drive element 2 is stopped in one of the parking sections 53, 54 of the first guide track 5. The parking sections 53, 54 are formed as external loops of the first guide track and face away from the opening 4. While in the parking sections 53, 54 neither of the cutting edges 31, 32 ,33, 34, 35 protrudes into the opening 4. While in the non-operating state a tube to be cut can be inserted to the opening 4 without interfering with the cutting edges 31, 32, 33, 34, 35.

The apparatus includes an indicator light 91 that notifies to a user when the cutting edges 31, 32, 33, 34, 35 are in one of the parking sections 53, 54.

The apparatus 10 can be equipped with a control device that, starting from a given non-operational state in that the cutting edges 31, 32, 33, 34, 35 are in one of the parking sections 53, 54, operates the motor as long as the cutting edges 31, 32, 33, 34, 35 reach the other parking or come back to the same parking section 53, 54. This can be practically realized by means of a pushbutton to activate the motor, by a sensor that detects the cutting edges 31, 32, 33, 34, 35 being in one of the parking sections 53, 54 and a control logic, e.g. in the form of an electronic control device, that interprets the sensor signal accordingly. This has the potential to increase the efficiency as the apparatus 10 is automatically transferred to its non-operating state as soon as a full cutting cycle has been completed.

Fig. 3 shows an exemplary cross section of a hollow tube 7 to be cut with the apparatus 10 according to the invention. The tube 7 can be a tube made from a foam material and in particular be produced by thermoforming. The collar or seam portions 71, 72 are bonding regions in that a previously flat material has been joined together to form a closed circumferential wall 73 that encloses an interior 74. A circumferential direction is indicated by arrows 3. One appreciates that the cross-section of the tube 7 visible in the paper plane is irregular and not circular. The positioning of the collar or seam portions 71, 72 corresponds to the slots 42, 43 in the structural base 1 of the cutting apparatus 10. In other embodiments of the tube 7 to be cut (not shown) the collar or seam portions 71, 72 can be arranged at other positions around the circumference as well so that the slots 42, 43 in the structural base 1 of the cutting apparatus 10 consequently have to be arranged differently. In one full rotation of the first drive element 2 of the cutting apparatus 10 both the circumferential wall 73 and the collar or seam portions 71, 72 are cut in one common cutting step. The forces acting on the tube 7 structure are exclusively tangential forces so that the tube 7 can be cut without significant deformation. This allows for both a highly automated and damage-free cutting, in particular shortening, of the tube 7.

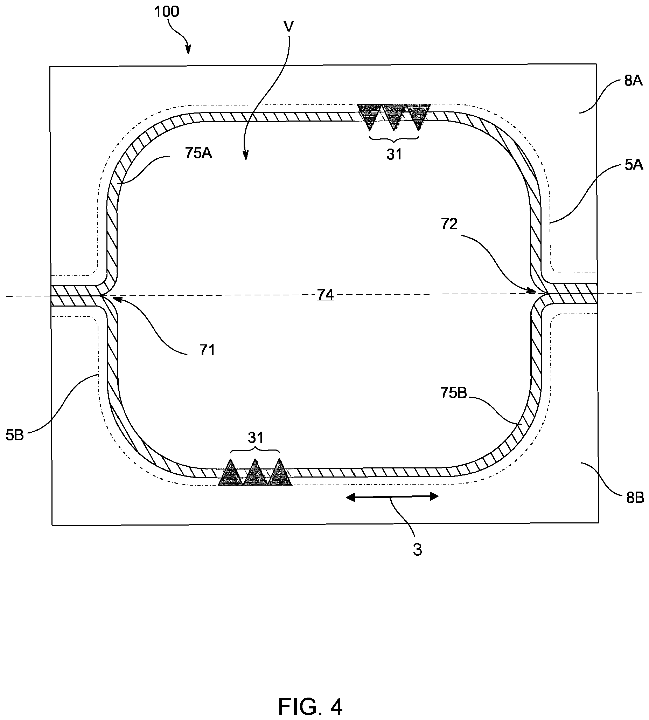

Fig. 4 shows a cross-sectional view of a thermoforming device 100 with an integrated cutting apparatus in a schematic representation. The thermoforming device 100 comprises an upper mold 8A and a lower mold 8B enclosing an interior volume V. In a thermoforming process, two foam sheets 75A, 75B are placed into the interior volume. At the edges of the sheets 75A, 75B a collar or flange 71, 72 develops along the mold parting surface (indicated by the dashed line) because the sheets 75A, 7B are formed to align with the inner surfaces of the mold 8A, 8B. This is achieved by heating the mold 8A, 8B and drawing the sheets through a vacuum towards the inner surfaces. Thus, a hollow tube 74 is formed, similar to what is depicted in Fig. 3.

Within the upper and lower molds 8A, 8B a first and second cutting apparatus is integrated. The upper mold includes a first guide track 5A for first cutting edges 31, and the lower mold 8B includes a second guide track 5B for second cutting edges 31. The cutting edges 31 reach into the interior volume V of the mold 8A, 8B when conveyed along the intended cutting contour. The cutting contour corresponds to the opening in the structural base (not shown) of the cutting apparatus. Both cutting edges are conveyed by drive elements, e.g. chains, along the circumferential upper and lower edges of the upper 8A and lower mold 8B, respectively.

The upper and lower cutting edges 31 can be moved Independent from one another by two independent drive mechanisms so that the upper mold 8A can be separated from the lower mold 8B in order to remove the manufactured hollow tube or duct. The cutting edges or blades 31 provide for a clean cut of the tube.

In summary, the present disclosure provides aspects of cutting apparatuses or cutting arrangements for cutting a hollow structure such as hollow tubes. The apparatus may include a guided band, chain, rope, wire or a belt along a "conveyance" path. The conveyance path surrounds the intended cutting contour. Cutting elements or cutting edges are, for example, fixed at the band reaching towards the interior of the cutting contour. The conveyance path has, in particular, one loop outside the cutting contour as a parking position for the cutting elements. The cutting elements cut tangentially along the contour through the material of the hollow structure. The hollow structure is preferably a flexible plastic foam material forming a duct. The band or the like is, e.g., motor driven.

Although the present invention has been described in accordance with preferred embodiments, it is obvious for the person skilled in the art that modifications are possible in all embodiments. E.g., instead of a housing structure a frame or rack structure can be employed to position and hold the components of the cutting apparatus, e.g. the guide track, drive element, motor drive etc. One can contemplate of several sections of the cutting contour that are treated by independently conveyed cutting edges or blades. The drive elements are not necessarily elongated and chain-like.

### REFERENCE NUMERALS

- 10: cutting apparatus
- 1: structural base
- 11: housing
- 100: thermoforming device
- 111: power cord
- 112: circumferential slit
- 2: first drive element, chain
- 3: circumferential direction
- 21: chain link
- 31-35: cutting edges
- 4: opening of the structural base
- 41: circumferential edge of the opening
- 42, 43: slots of the structural base
- 5, 5A: first guide track
- 5B: second guide track
- 51: first cutting section of the first guide track
- 52: second cutting section of the first guide track
- 53, 54: parking sections of the first guide track
- 55, 56: collar cutting sections of the first guide track
- 57, 58: third and fourth cutting sections
- 6: sprocket / pulley
- 6': drive shaft
- 7: hollow tube
- 71, 72: collar portions of the hollow tube
- 73: wall of the hollow tube
- 74 75A,: interior of the hollow tube
- 75B: polyolefin foam sheet
- 8A, 8B: mold tool
- 9: switch / pushbutton
- 91: indicator light
- D: first cut direction
- V: interior volume

## Claims

1. A cutting apparatus (10) for cutting hollow tubes (7), in particular hollow tubes (7) made of a soft material, in particular a foam material, comprising:
- a structural base (1) comprising an opening (4) adapted for insertion of a tube region to be cut off,
- the structural base (1) further comprising a first guide track (5) that at least in a first cutting section (51) extends near a circumferential edge (41) of the opening (4) ,
- a first drive element (2) that is received in the first guide track (5) and is movable along the first guide track (5) in a predefined first circumferential cut direction (D),
- wherein the first drive element (2) is equipped with at least one cutting edge (31, 32, 33, 34, 35), that is directed towards the opening (4), and
- wherein the cutting edge (31, 32, 33, 34, 35) protrudes at least partially into the opening (4) while in the first cutting section (51).

2. The cutting apparatus (10) according to claim 1, wherein the guide track (5) is implemented to prevent a radial movement of the drive element (2) and/or the cutting edge (31, 32, 33, 34, 35).

3. The cutting apparatus (10) according to claim 1 or 2, wherein the first guide track (5) comprises at least a second cutting section (52) extending near the circumferential edge (41) of the opening, wherein the second cutting section (52), relatively to the first cutting section (51), is in particular arranged at an opposite side of the opening (4) and wherein the cutting edge (31, 32, 33, 34, 35) protrudes at least partially into the opening (4) while in the second cutting section (52).

4. The cutting apparatus (10) according to claim 3 wherein the first (51) and/or second (52) and/or further cutting sections (57, 58) of the first guide track (5) extend over at least 80 %, in particular at least 90 %, of the total circumference of the opening (4).

5. The cutting apparatus (10) according to any of the claims 1 to 4, wherein the opening (4) has a non-circular cross-section.

6. The cutting apparatus (109 according to any of the claims 1 to 5, wherein the first guide track (5) comprises at least one parking section (53, 54), and wherein the cutting edge (31, 32, 33, 34, 35) does not protrude into the opening (4) while in the parking section (53, 54).

7. The cutting apparatus (10) according to claim 6, wherein the parking section (53, 54) is formed by a section of the first guide track (5) that extends away from the edge (41) of the opening (4), in particular in the form of a loop or a radially or tangentially extending section.

8. The cutting apparatus (10) according to any of the preceding claims, wherein the structural base (1) comprises at least one slot (42, 43) that extends from the opening (4) into the structural base (1), in particular in a radial or tangential direction, wherein the slot (42, 43) is adapted to receive a collar portion (71, 72) of the tube (7) to be cut.

9. The cutting apparatus (10) according to claim 8, wherein the first guide track (5) comprises a collar cutting section (55, 56), in that it extends near an edge of the slot (42, 43), and wherein the at least one cutting edge (31, 32, 33, 34, 35) protrudes into the slot (42, 43) while in the collar cutting section (55,56).

10. The cutting apparatus (10) according to any of the preceding claims,
- wherein the structural base (1) comprises a second guide track that at least in a first cutting section extends near a circumferential edge (41) of the opening (4),
- and wherein the cutting apparatus (10) comprises a second drive element that is received in the second guide track and is movable along the second guide track in a predefined circumferential second cut direction,
- wherein the second drive element is equipped with at least one cutting edge that is directed towards the opening (4),
- and wherein the cutting edge of the second drive element protrudes at least partially into the opening (4) while in the first cutting section,
wherein preferably the second cut direction is inverted relatively to the first cut direction (D).

11. The cutting apparatus (10) according to any of the preceding claims, wherein the first drive element (2) and/or second drive element is a chain, a rope, a wire or a belt.

12. The cutting apparatus (10) according to any of the preceding claims, wherein the first drive element (2) and/or second drive element is equipped with a plurality of cutting edges (31, 32, 33, 34, 35) that are spaced along the longitudinal extension of the first drive element (2) and/or second drive element, wherein in particular the plurality of cutting edges (31,32,33,34,35) having different heights so as to protrude into the opening (4) to a different extent.

13. The cutting apparatus (10) according to any one of claims 1 - 12, wherein the first and/or second guide track (5) comprises at least one non-linear sectio..

14. The cutting apparatus (10) according to any of the preceding claims, further comprising a mold tool (87A, 8B) having an interior volume (V) for thermoforming the hollow tube (7), wherein the structural base (1) surrounds a cross-section of the mold tool (8A, 8B), the cutting edge (31) protruding into the interior volume (V).

15. A thermoforming device (100) comprising a mold tool (8A, 8B) and a cutting apparatus (1) according to any one of claims 1 - 14, wherein the mold tool comprises an upper (8A) and a lower mold (8B).
